# DEMANDE DE BREVET EUROPEEN

(11) **EP 0 549 429 A1**
(43) Date de publication de la demande: **30.06.1993**
(21) Numéro de dépôt: 92403454.9
(22) Date de dépôt: 17.12.1992
(51) Int. Cl.: H02K 29/08, H02K 29/10

(54) **Rotor à aimants permanents doté d'une indication de sa position angulaire instantanée et machine magnéto-dynamique, comme un moteur sans collecteur, équipée d'un tel rotor**

(30) Priorité: 20.12.1991 FR 9115920
(71) Demandeur: VALEO SYSTEMES D'ESSUYAGE, 78180 Montigny-Le-Bretonneux (FR)
(72) Inventeur: Garcia, José, F-78310 Maurepas (FR)
(74) Mandataire: Gamonal, Didier

(57) **Abrégé**

La présente invention concerne un rotor à aimants permanents qui est doté d'une indication de sa position angulaire instantanée. Elle concerne aussi une machine magnéto-dynamique, comme un moteur sans collecteur, à commutation électronique notamment, équipée d'un tel rotor.

Selon l'invention, on dispose un capteur (9) de la position des zones aimantées (2 - 5) du rotor lui même de façon à élaborer un signal représentatif de la position angulaire instantanée T du rotor.

## Description

La présente invention concerne un rotor à aimants permanents qui est doté d'une indication de sa position angulaire instantanée. Elle concerne aussi une machine magnéto-dynamique, comme un moteur sans collecteur, à commutation électronique notamment, équipée d'un tel rotor.

Dans l'art antérieur, on connait déjà des rotors à aimants permanents, par exemple constitués à l'aide de tuiles en matériau magnétique aimanté de façon permanente. Dans le cas d'un moteur, le rotor installé dans un stator bobiné, est mis en mouvement par la commutation contrôlée des bobines du stator en fonction de la position instantanée relative d'un pôle magnétique du rotor et de la bobine considérée.

A cette fin, il faut connaître la position angulaire instantanée (à chaque instant) du rotor pour commander les commutations du courant dans les bobines du stator.

Pour produire un signal de commande des commutations représentatif de la position angulaire instantanée du rotor, on sait disposer un capteur lié dans une position de référence (origine) à un point du stator, et une indication de la position instantanée du rotor sur un moyen lié au rotor.

Lors du défilement du moyen support de l'indication de position angulaire instantanée du rotor devant le capteur fixe, ce dernier génère un signal de détection représentatif de la position angulaire instantanée du rotor.

Cependant dans l'art antérieur, le moyen support de l'indication de position instantanée du rotor est réalisé par une pièce supplémentaire, ce qui est désavantageux en termes de temps de montage et de coût de fabrication.

C'est un but de la présente invention de fournir un rotor à aimants permanents qui ne nécessite pas une pièce supplémentaire à titre de moyen support de l'indication de position angulaire instantanée du rotor.

En particulier, lors du montage, cette pièce de support doit être calée en position par rapport aux pôles magnétiques du rotor. Cette opération de calage est une source d'erreurs et de déviation statistique lors d'une fabrication de masse.

C'est un but de la présente invention d'éviter d'ajouter une opération de calage lors de la fabrication de la machine.

De plus, l'ajout d'une pièce mécanique entraîne une charge et un encombrement dans la machine qui ne sont pas toujours envisageables. En particulier, quand on cherche à réduire la longueur sur l'axe de rotation du moteur, l'ajout de cette pièce entraîne des difficultés.

C'est un but de la présente invention d'éviter d'allonger la machine.

En effet, l'invention concerne un rotor à aimants permanents pour machine magnéto-dynamique. Elle se caractérise en ce que le rotor est doté d'une indication de sa position angulaire instantanée réalisée directement par au moins une extrémité des aimants permanents du rotor.

Dans un mode de réalisation particulier où les aimants permanents sont montés sur un corps rotorique, au moins l'une des extrémités des aimants permanents dépasse du corps rotorique de façon à dégager un espace vide entre l'arbre de rotation et une face interne des aimants permanents, espace vide destiné à permettre le passage de la partie active d'un capteur destiné à produire un signal représentatif de la position angulaire instantanée du rotor.

Dans un mode préfére de réalisation, le capteur est un capteur à effet Hall.

L'invention concerne aussi une machine magnétodynamique. Elle se caractérise en ce qu'elle comporte un rotor à aimants permanents configuré selon ce qui précède et en ce qu'elle comporte au moins un capteur destiné à produire un signal représentatif de la position angulaire instantanée du rotor, le capteur étant fixe par rapport au stator.

Dans un mode préfére de réalisation, le capteur est directement monté sur un circuit imprimé ou analogue fixé par un moyen approprié au stator ou à une pièce liée au stator comme un couvercle de carcasse.

D'autres avantages et caractéristiques de la présente invention seront mieux compris à l'aide de la description et des dessins anexés qui sont :
la figure 1 : une vue d'un rotor à aimants permanents selon l'invention ;
la figure 2 : un graphe du signal de détection d'un capteur utilisé avec le rotor de la figure 1 ;
la figure 3 : une vue en coupe d'une représentation schématique d'un moteur à commutation électronique selon l'invention.

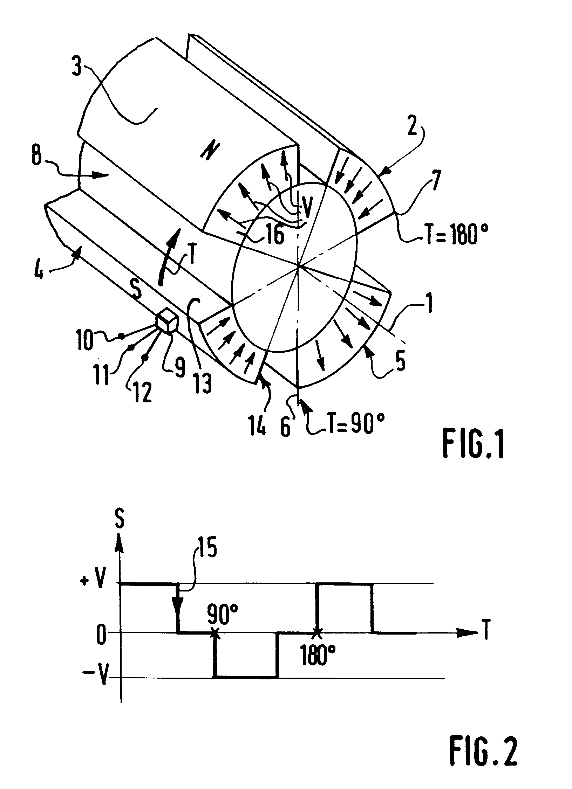

A la figure 1, on a représenté un premier mode de réalisation d'un rotor selon l'invention. Le rotor représenté comporte un axe 1 de rotation, en fait matérialisé par un arbre de rotation monté sur des paliers montés sur la carcasse d'une machine magnétodynamique non représentée à la figure 1.

Le rotor comporte un corps rotorique 8, réalisé notamment avec des tôles magnétiques empilées et serrées ensemble sur l'arbre de rotation, ainsi qu'il est connu.

Le corps rotorique présente une forme cylindrique même s'il peut être constitué par des sections non circulaires (polygone fermé motamment, dont chaque face est réservée à recevoir une zone aimantée, par exemple).

Il présente une surface d'appui sur laquelle viennent se fixer des zones aimantées 2 - 5, qui présentent vers l'extérieur du rotor, en fait en général en vis à vis des parties actives des bobines du stator, une alternance de pôles magnétiques N et S.

Au dessin, le rotor présente deux paires de pôles magnétiques. Ce nombre de paires de pôles est d'au moins un. Les zones aimantées 2 - 5 sont calées en position sur des axes 6 et 7. En pratique, mais non nécessairement, les zones aimantées sont réalisées par des tuiles de formes plus ou moins complexes, mais qui affectent en générale une forme de secteur annulaire cylindrique dont la face intérieure est appuyée sur la face d'appui du corps rotorique. Ces tuiles sont liées au corps rotorique par des moyens connus.

L'inventeur a découvert que les zones aimantées 2 - 5 pouvaient en pratique servir directement d'indication de la position angulaire T du rotor dans sa rotation autour de l'axe 1, sans avoir besoin d'ajouter une pièce support d'une indication de position.

Dans l'art antérieur, on a l'habitude d'ajouter un disque par exemple porteur d'aimants qui défilent devant un capteur à effet Hall. On a aussi proposé de disposer sur le rotor ou sur son arbre, un disque sur lequel est déposée une piste lisible par des mmoyens optiques. Ces dispositifs sont rendus inutiles selon la présente invention.

En effet, en disposant la partie active 9 d'un capteur à effet Hall, doté de deux broches d'alimentation respectivement 10, positive et 11, négative, vis à vis d'une extrémité du rotor, le signal de détection, prélevé sur une broche 12 du capteur 9 est un signal représentatif de la position instantanée T du rotor.

Le capteur à effet Hall, peut être unique ou il peut être multiplié selon les phases que l'on cherche à détecter dans le signal représentatif de la position instantanée du moteur.

A la figure 2, on a représenté le signal s de détection prélevé sur la broche 12 du capteur 9. Quand la position instantanée T du rotor suite à sa rotation, représentée en abcisses, démarre de 0°, on détecte la transition provoquée par le passge de la face 13 de la tuile 4. La sortie 12 du capteur passe à la tension +V, représentée en ordonnées.

Tant que la zone aimantée 4 défile devant le capteur 12, la sortie S est maintenue à +V. Puis, la tranche 14 de la tuile 4 passe devant la partie active du capteur 9 et la tension de sortie du capteur passe à zéro. Quand la tuile suivante dont l'aimantation est inversée de la précédente, le processus recommence, par exemple avec un signe négatif. Cette inversion de signe du signal de sortie S sur la borne 12 dépend du type du capteur et de son mode d'alimentation électrique 10, 11.

Dans la pratique, à cause des formes des tuiles 2 - 5 et des bandes passantes limitées des capteurs, les transitions, comme la transition vers zéro 15, sur le signal de sortie S ne sont pas toujours aussi raides. Elles peuvent présenter une pente, mais, elles ont toujours lieu dans des positions angulaires définies par rapport à la position T du rotor.

Dans ce mode de réalisation, la partie active du capteur fixe 9 a été disposée vis à vis de la face active des zones aimantées, c'est à dire, dans l'entrefer entre le rotor et le stator. Une telle disposition n'est pas envisageable si elle conduit à occuper une partie ayant un rôle dans le processus de production du couple moteur.

Afin de remédier à une éventuelle configuration désavantageuse, dans un autre mode de réalisation, la partie active du capteur est disposée en vis à vis des tranches, comme la tranche 16 des tuiles. La tranche 1 présente des vecteurs d'aimantation V dont le défilement devant un capteur 9 permet d'élaborer un signal analogue à celui de la figure 2.

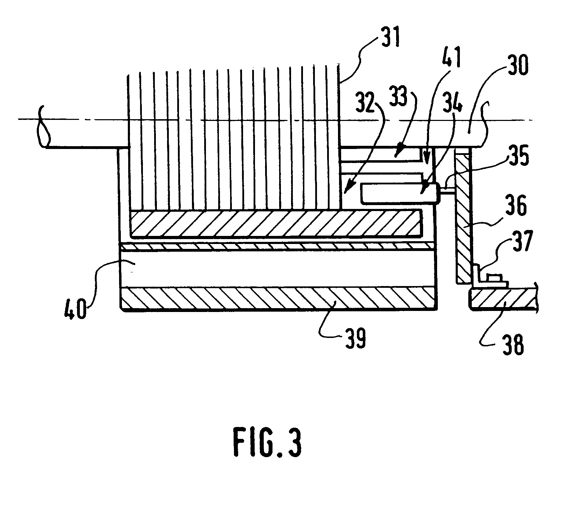

A la figure 3, on a représenté en coupe une représentation schématique d'un moteur à commutation électronique selon l'invention.

Dans cet autre mode de réalisation, le rotor est constitué par un corps rotorique 31 monté sur un arbre rotorique 30 lui même monté sur des paliers, ainsi qu'il est connu.

Les tuiles 32, 33, .. en matériau magnétique aimanté de façon permanente, sont montées sur la surface d'appui du rotor. Elle sont montées à au moins une extrémité, en porte à faux sur le corps rotorique et ce porte à faux permet de dégager un espace vide 41 entre les faces internes des tuiles et l'arbre rotorique 30.

Dans cet espace vide, on vient loger la partie active d'un capteur 34, notamment à effet Hall. Ce capteur est doté de broches comme la broche 35, qui sont montées et soudées sur un circuit imprimé 36 qui porte les borniers, non représentés, de connexion des enroulements statoriques et des capteurs comme le capteur 34 à un câble de liaison à des circuits extérieurs, non représentés.

Dans un mode de réalisation, le circuit imprimé porte aussi des circuits électroniques de traitement des signaux des capteurs.

Dans un autre mode de réalisation, le circuit imprimé porte aussi des circuits électroniques pour réaliser les commutations des alimentations des différents enroulements statoriques, en fonction des signaux de détection des capteurs précités que le circuit imprimé porte. Les alimentations sont fournies par un câble de liaison non représenté, connecté à un bornier correspondant sur le circuit imprimé 36.

Le circuit imprimé 36 peut être monté par tout moyen dans une orientation convenable par rapport aux zones aimantées du rotor par exemple par des jambes 37 dont l'extrémité est fixée sur la carcasse de la machine. Cette orientation ou positionnement n'ajoute pas de problèmes particuliers, puisque l'on sait déjà disposer une telle pièce par rapport aux enroulements statoriques pour réaliser leur connexion aux borniers précités.

Dans le mode de réalisation de la figure 3, le stator 39 comporte une culasse dans laquelle sont pratiquées des encoches, ainsi qu'il est connu. Dans chaque encoche 40, on dispose la partie active d'un enroulement, constitué par plusieurs fils conducteurs rectilignes.

On remarque que le moyen d'indication de la position angulaire instantanée T du rotor n'allonge pas le moteur de la figure 3, et que les parties actives, au point de vue magnétique, sont utilisées au mieux.

De plus, on évite toute opération de calage de l'indication, puisqu'elle est ici constituée par l'aimantation des tuiles 32, 33, ... prise sur leur face interne dans le logement ou espace vide 41.

La présente invention trouve aussi application pour les moteurs à rotor extérieur. En particulier, la détection du passage des zones aimantées peut être réalisée sur toute zone extérieure du rotor extérieur.

En particulier, les zones aimantées peuvent être constituées sur un anneau magnétique monté sur l'arbre rotorique.

On peut utiliser d'autres capteurs mettant en jeu des effets magnétiques que le capteur à effet Hall. De plus, dans le cas où les zones aimantées sont des tuiles espacées les unes des autres, on peut aussi utiliser un capteur optique dont la partie active coimporte une partie émettrice qui émet un faisceau optique qui est réfléchi sur la face en vis à vis de la tuile. La partie de détection de la partie active du capteur subit un changement quand le faisceau optique réfléchi ne rencontre plus de tuile au passage entre deux tuiles. Le signal de sortie ou de détection de ce capteur présente donc aussi la propriété de représenter la position angulaire instantanée T du rotor.

## Revendications

1. Rotor à aimants permanents pour machine magnéto-dynamique, caractérisé en ce que le rotor est doté d'une indication de sa position angulaire instantanée réalisée directement par au moins une extrémité des aimants permanents (2 - 5) du rotor.

2. Rotor selon la revendication 1, caractérisé en ce qu'il comporte un corps rotorique (31) sur lequel sont montées des zones aimantées comme des tuiles (32, 33, ...) dont au moins une extrémité est en porte à faux au delà du corps rotorique de façon à ménager un espace vide (41) ou logement destiné à au moins un capteur (34) produisant un signal représentatif du passage de la face interne de chaque zone aimantée.

3. Machine magnéto- dynamique, caractérisée en ce qu'elle comporte au moins un capteur (9, 34) disposé en regard d'une extrémité des zones aimantées d'un rotor et fixé par rapport au rotor.

4. Machine selon la revendication 3, caractérisée en ce que le (ou les) capteur(s) (9) est disposé vis à vis de la face active du rotor.

5. Machine slon la revendication 3, caractérisée en ce que le (ou les) capteur(s) (9) est disposé vis à vis d'une tranche (16) d'au moins une extrémité des zones aimantées.

6. Machine selon la revendication 3, caractérisé en ce que le (ou les) capteur(s) (34) est disposé dans un logement (41) pratiqué à l'extrémité des zones aimantées (32, 33, ...) vis à vis d'une face interne des zones aimantées.

7. Machine selon l'une des revendications 3 à 5, caractérisé en ce que le (ou les) capteur(s) (9, 34) est un capteur à effet Hall.

8. Machine selon les revendications 3 à 5 du genre dont le rotor comporte des tuiles (2 - 5) espacées, caractérisé en ce que le (ou les) capteur(s) (9, 34) est un capteur optique émettant un faisceau optique sur une face en vis à vis d'une extrémité des tuiles aimantées et détectant le passage de l'espacement entre tuiles successives à titre de représentation de la position instantanée (T) du rotor.

9. Machine selon l'une des revendications 3 à 8, caractérisé en ce que le (ou les) capteur(s) (9, 34) est monté sur un circuit imprimé (36) qui porte des borniers de connexion à un câble de liaison à la machine et/ ou à des circuits électroniques de traitement des signaux du (ou des) capteur(s) et/ ou de commande des commutations des alimentations des enroulements statoriques.

10. Machine selon la revendication 9, caractérisé en ce que le circuit imprimé porteur du (ou des) capteur(s) (9, 34) est monté sur la carcasse (38) de la machine.
